# EUROPÄISCHE PATENTSCHRIFT

(11) **EP 1 889 775 B1**
(45) Veröffentlichungstag und Bekanntmachung des Hinweises auf die Patenterteilung: **06.01.2010**
(21) Anmeldenummer: 07113215.3
(22) Anmeldetag: 26.07.2007
(51) Int. Cl.: B62D 6/00, B62D 6/04

(54) **Verfahren zur Lenkwinkelkorrektur in einer Hilfskraftlenkung für ein Kraftfahrzeug**
Method for correcting the steering angle in an assisted power steering for a motor vehicle
Procédé pour la correction d'angle de direction dans une direction assistée pour un véhicule automobile

(30) Priorität: 17.08.2006 DE 102006038692
(43) Veröffentlichungstag der Anmeldung: 20.02.2008
(73) Patentinhaber: ZF-Lenksysteme GmbH, 73527 Schwäbisch Gmünd (DE)
(72) Erfinder: Nutsch, Torsten, 71397, Leutenbach (DE)

(56) Entgegenhaltungen:
- EP-A- 1 630 071
- EP-A- 1 683 706
- WO-A-2004/005093
- WO-A-2005/054040
- DE-A1- 10 032 340
- DE-A1- 19 948 913

## Beschreibung

Die Erfindung betrifft ein Verfahren zur Lenkwinkelkorrektur in einer Hilfskraftlenkung für ein Kraftfahrzeug nach dem Oberbegriff des Anspruchs 1.

Heutige elektrische oder elektrohydraulische Hilfskraftlenkungen, bei denen ein Hilfsmoment zur Unterstützung eines von einem Fahrer mittels einer Lenkhandhabe aufgebrachten Handlenkmoments in den Lenkstrang eingeleitet wird, weisen eine Regelstruktur auf, bei der abhängig von einem Fahrzeugszustand, beispielsweise einer momentanen Fahrzeuggeschwindigkeit und einem gemessenen Lenkradmoment, ein zusätzliches Lenkmoment zur Unterstützung des Handlenkmoments ermittelt wird.

Durch die entsprechende Ansteuerung eines elektrischen Servomotors oder eines elektrischen Wandlers (Servoventils), wird das elektrisch oder hydraulisch erzeugte Hilfsmoment in den Lenkstrang der Hilfskraftlenkung eingeleitet und bewirkt somit die Verstellung oder Beibehaltung einer einem Rad-Lenkwinkel entsprechenden Position der gelenkten Räder. Auf das Fahrzeug wirken dabei externe und interne Störgrößen.
Externe Störgrößen sind Umwelteinflüsse, die von außen auf das Fahrzeug einwirken, wie z.B. Seitenwind und Fahrbahnrückwirkungen.
Zu den internen Störgrößen gehören die Beladung oder Krafteinwirkungen von Hängern auf die Zugmaschine, die sich destabilisierend auf den Lenkwinkel bzw.
Rad-Lenkwinkel der Zugmaschine auswirken. Diese sind bei Lastkraftwagen von besonderer Relevanz.

### Stand der Technik

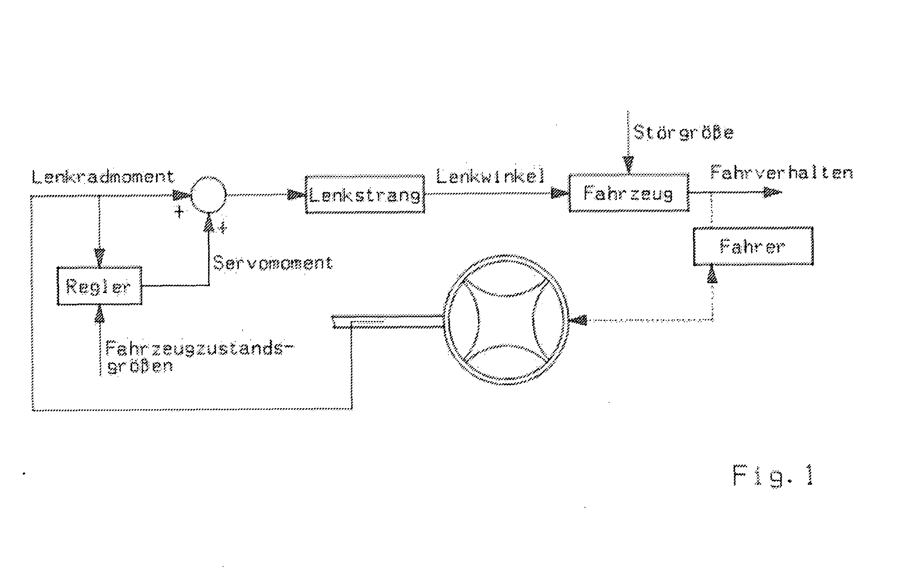

Figur 1 zeigt eine aus dem Stand der Technik bekannte Regelungsstruktur.

Das in der Lenksäule auftretende Lenkradmoment wird gemessen und als Maßgabe für ein Hilfsmoment verwendet. Entsprechend dem Hilfsmoment wird eine elektrische Stellgröße ermittelt und einer Einheit zur Momenten-Überlagerung, einem Servomotor oder einem elektrisch steuerbaren Servoventil, in Verbindung mit einem hydraulischen Zylinder, zugeführt. Das abgegebene Hilfsmoment wird mittels eines Getriebes in den Lenkstrang in bekannter Weise eingeleitet. In der Fachwelt wird dieses Hilfsmoment auch als Servomoment bezeichnet.
Das Hilfsmoment und das Lenkradmoment bewirken zusammen einen Lenkwinkel im Lenkstrang beziehungsweise einen Rad-Lenkwinkel der gelenkten Räder des Fahrzeugs. Wichtig hierbei ist, dass der Fahrer selbst in den Regelkreis eingebunden ist, er schließt sozusagen den Regelkreis bezüglich der gewünschten Fahrzeugrichtung, indem er die durch externe und interne Störgrößen hervorgehobenen Fahrrichtungsänderungen (Ist-Fahrverhalten) mittels seines Lenkrades entsprechend korrigiert.
Genau genommen entspricht die in der Figur 1 gezeigte technisch implementierte Regelungsstruktur aus diesen Gründen eher einer Steuerung als einer Regelung.

Von Nachteil dabei ist, dass das Regelungssystem nicht fähig ist, selbsttätig Lenkwinkelkorrekturen vorzunehmen, um externe wie auch interne Störgrößen zu kompensieren.

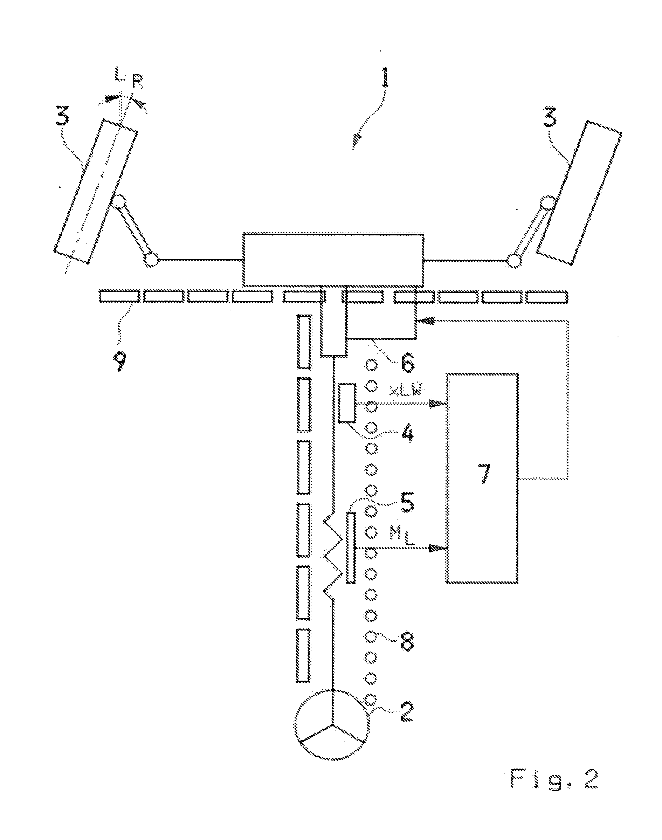

Figur 2 zeigt eine Hilfskraftlenkung nach dem Stand der Technik.

Die Hilfskraftlenkung 1 weist eine Lenksäule 8 als Bestandteil eines Lenkstrangs 9 auf. In Wirkverbindung mit der Lenksäule 8 stehen eine Lenkhandhabe 2, ein Lenkmomentsensor 5 und ein Lenkwinkelsensor 4. Mittels der Lenkhandhabe 2 leitet der Fahrer ein seinem Fahrrichtungswunsch entsprechendes Handlenkmoment M_{L} in die Lenksäule 8 ein.

In einer an sich bekannten Art und Weise wird die aus dem Lenkmomentsensor 5 stammende Information über das Handlenkmoment einer Steuereinheit 7 zugeführt, um im Folgenden eine Stellgröße für den Elektromotor 6 ( Drehmomentüberlagerungseinheit) zu ermitteln, um ein Hilfslenkmoment M_{H} zur Unterstützung des Handlenkmoments M_{L} aufzubringen und in den Lenkstrang 9 mittels des Elektromotors 6 einzuleiten. Unter Verwendung einer nicht dargestellten Leistungsendstufe werden dabei Phasenströme in den E-Motor eingeprägt, die ein Drehmoment am Rotor erzeugen. Das Drehmoment wird mittels eines Getriebes in den Lenkstrang 9 zur Verstellung oder Aufrechterhaltung einer dem Radlenkwinkel L_{R} entsprechenden Position der gelenkten Räder 3, eingeleitet.

In der DE10032340 A1, die den Oberbegriff des Anspruchs 1 bildet, wird ein Verfahren für eine Fahrzeuglenkung beschrieben, bei welchem sich Momentenunterstützung und Fahrdynamikregelung nicht negativ beeinflussen. Die Fahrdynamikregelung verstellt die Stellung der gelenkten Räder unabhängig vom Lenkwunsch des Fahrers. Bei dem Verfahren wird der Lenkradwinkel erfasst und fahrgeschwindigkeitsabhängig modifiziert,
■ ein Korrekturlenkwinkel in Abhängigkeit der Fahrdynamik des Fahrzeugs ermittelt,
■ der modifizierte Lenkradwinkel und der Korrekturlenkwinkel zu einem Soll-Lenkwinkel überlagert,
■ die Stellung der gelenkten Räder erfasst,
■ die Winkeldifferenz zwischen Soll-Lenkwinkel und der Stellung der gelenkten Räder gebildet,
■ die Stellung der gelenkten Räder in Abhängigkeit der Winkeldifferenz geregelt und
■ der Korrektur-Lenkradwinkel an der Lenksäule kompensiert.

Aus dem Stand der Technik sind ferner so genannte Steer-by-Wire- Lenksysteme bekannt, die sich primär durch eine nicht vorhandene Lenksäule auszeichnen.

Ebenfalls aus dem Stand der Technik sind so genannte Überlagerungs-Lenksysteme bekannt, die eine mechanisch aufgetrennte Lenksäule, geeignet zur Einleitung eines Zusatz-Lenkwinkels, aufweisen.

Wirken bei Steer-by-Wire- oder Überlagerungs- Lenksystemen externe Störgrößen auf das Fahrzeug ein, so kann ein Regler korrigierend auf den Lenkwinkel eingreifen, ohne den Lenkradwinkel dabei zu verändern. Davon unabhängig ist die Lenkwinkel-Vorgabe durch den Fahrer.
Dies ist bei einer Hilfskraftlenkung nach dem Stand der Technik, wie in Fig 1 gezeigt, nicht möglich.
Wird ein Korrektur-Lenk-Moment bestimmt und in den Lenkstrang zur Veränderung des Lenkwinkels eingeleitet, so ändert sich auch der Lenkradwinkel. Damit wird es schwierig, zwischen einem fahrerverursachten Lenkeingriff und einem reglerverursachten Lenkeingriff zu unterscheiden, da der Fahrer zur selben Zeit eine Lenkwinkel- Veränderung vornehmen kann. Es ist daher sehr schwer oder gar unmöglich zu rekonstruieren, welcher Anteil der Lenkwinkel-Veränderung vom Fahrer und welcher vom Regler verursacht wird.

Der Erfindung liegt demnach die Aufgabe zugrunde ein Verfahren zur Lenkwinkelkorrektur in einer Hilfskraftlenkung gemäß des Oberbegriffs des Hautpanspruchs anzugeben, welches es ermöglicht, Lenkwinkelkorrekturen vorzunehmen.
Die Lösung der Aufgabe ist im kennzeichnenden Teil des Anspruchs 1 angegeben.

Der Vorteil dieser Lösung ist darin zu sehen, dass der Lenkwinkel- Regelkreis für einen Lenkwinkel entsprechend einer "closed- loop" - Regelstruktur geschlossen ist und eine Ausregelung von Störgrößen ermöglicht wird, wobei gleichzeitig fahrdynamische Lenkwinkel- Korrekturen vorgenommen werden können.
Außerdem wird es dadurch grundsätzlich möglich, eine Unterscheidung vom gewünschten Lenkwinkel und tatsächlichen Lenkwinkel zu treffen. Dies ermöglicht wiederum eine Ermittlung des gewünschten Fahrverhaltens unabhängig vom tatsächlichen Lenkwinkel.

Es ist vorgesehen, den Wunschlenkwinkel mittels eines Lenkstrangmodells in Abhängigkeit eines Handlenkmoments zu ermitteln. Dies hat den Vorteil, dass das durch den Fahrer am Lenkrad wahrgenommene Lenkgefühl vorgegeben werden kann und weniger von fahrzeugspezifischen Eigenschaften abhängig ist.

Eine vorteilhafte Ausführungsform ist im abhängigen Anspruch 2 angegeben.

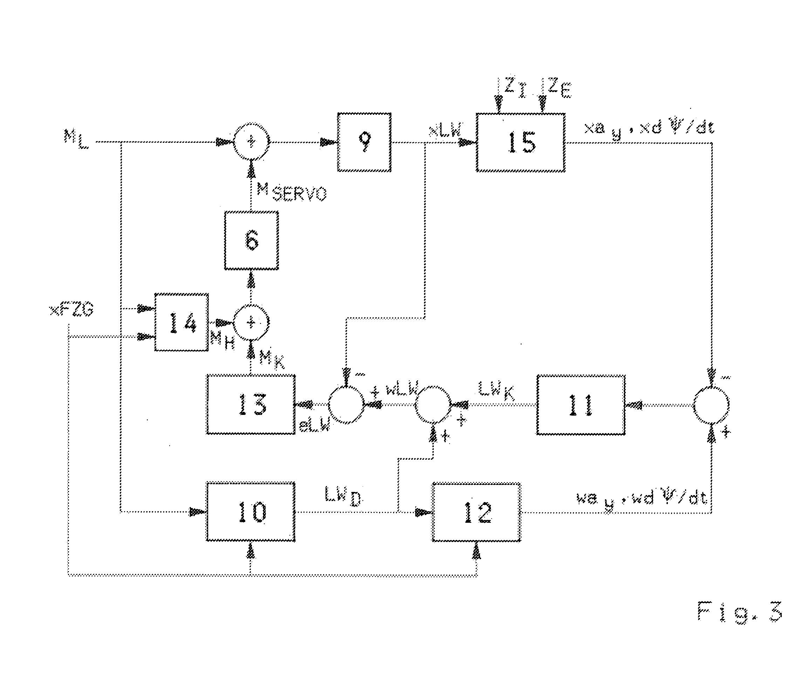

Figur 3 zeigt die bevorzugte Ausführungsform des erfindungsgemäßen Verfahrens.
Die Information über das Handlenkmoment M_{L} wird dem Lenkstrangmodell 10 zugeführt. Das Lenkstrangmodell beinhaltet ein mathematisches Modell, in welchem physikalische Größen und Kennlinien des im Lenkstrang 9 befindlichen Servoventils und Elektromotors 6 hinterlegt sind. Zusätzlich sind Massen, Trägheitsmomente und Reibungskennwerten weiterer im Lenkstrang 9 befindlicher Bauteile hinterlegt. Alternativ ist vorgesehen, dass ein- oder mehrdimensionale Kennlinien, die in der Lage sind, das Verhalten des gesamten Lenkstranges 9 nach außen hin zu beschreiben, im Modell hinterlegt werden.
Anhand des Lenkstrangmodells 10 wird ein Wunschlenkwinkel LW_{D} ermittelt, der einem Fahrzeugmodell 12 zugeführt wird.
Das Fahrzeugmodell 12 ermittelt daraus ein Soll-Fahrverhalten, welches einem gewünschten Fahrverhalten entspricht.
Auf das Fahrzeug 20 wirken dabei externe und interne Störgrößen Z_{I} und Z_{E} ein, die sich destabilisierend auf das Ist-Fahrverhalten auswirken.
Ein Fahrdynamikrechner 11 ermittelt aufgrund eines Vergleichswertes des Soll-Fahrverhaltens wa_{y}, wdψ/dt ( Soll- Querbeschleunigung und/oder Soll Gierrate) in Bezug zum gemessenen Ist-Fahrverhalten xa_{y}, xdψ/dt (Ist- Querbeschleunigung oder Ist- Gierrate) eine Größe zur Lenkwinkelkorrektur LW_{K}, die dem aus Lenkstrangmodell 10 stammenden Wunschlenkwinkel LW_{D} additiv überlagert wird. Die überlagerte Größe stellt den Soll-Lenkwinkel wLW dar. Dieser wird mit der aus dem Lenkwinkelsensor 4 stammenden Information über den Ist-Lenkwinkel xLW zur Bestimmung einer für den Lenkwinkelregler 13 relevanten Lenkwinkelabweichung eLW verglichen. Der Lenkwinkelregler bestimmt im Folgenden Stellgrößen entsprechend einem von der Lenkwinkelabweichung eLW abhängigen Korrekturlenkmoment M_{K} zur Beeinflussung des Abgabemoments des Elektromotors 6.
Eine Vorsteuerung 14 bestimmt zusätzlich anhand des Handlenkmoments M_{L} ein Hilfsmoment M_{H} .
Das Korrekturlenkmoment M_{K} wird dem Hilfsmoment M_{H} additiv überlagert und als Servomoment M_{SERVO} mittels des Elektromotors 6 in den Lenkstrang 9 eingeleitet.
In Summe wirken im Lenkstrang 9 das Handlenkmoment M_{L}, das Hilfsmoment M_{H} und das Korrekturmoment M_{K}.
Des weiteren sieht das Ausführungsbeispiel vor, dem Lenkstrangmodell 10, dem Fahrzeugmodell 12 und der Vorsteuerung 14 weitere Fahrzustandsgrößen xFZG des Fahrzeuges, insbesondere die Fahrzeuggeschwindigkeit, Fahrzeugmasse und Schwerpunktlage, zuzuführen.

Im Wesentlichen ergeben sich bei Durchführung des erfindungsgemäßen Verfahrens zwei hauptsächliche Interaktionsfälle mit dem Fahrer, auf die im Folgenden näher eingegangen wird.

### Fall 1: Der Fahrer hält das Lenkrad nicht fest:

Hält der Fahrer das Lenkrad nicht fest, so ergibt sich das am Lenkrad wirkende Moment im statischen Fall zu Null. Damit stellt sich ein stationärer Zustand des Lenkstrangmodells ein. Dieser ist dadurch gekennzeichnet, dass der gewünschte Lenkwinkel (Wunschlenkwinkel) und das gewünschte Fahrverhalten (Soll-Fahrverhalten) konstant sind. Weicht das Fahrzeug durch Einfluss einer extern oder intern verursachten Störgröße von einem gewünschten Fahrzeugverhalten ab, so reagiert die erfindungsgemäße Regelungsstruktur derart, dass ein einem Korrekturlenkwinkel entsprechendes Korrekturmoment ermittelt wird. Abgesehen von Beschleunigungs- und Abbremsmomenten in der Lenksäule und im Lenkrad ändert sich dabei das gemessene Handlenkmoment M_{L} nicht. Trotz des Kompensationseingriffs ändert sich der Wunschlenkwinkel nicht und es tritt somit auch keine Rückwirkung des Korrektureingriffs auf das Soll- Fahrverhalten auf.

### Fall 2: Der Fahrer hält das Lenkrad fest:

Tritt eine Störung des Fahrverhaltens auf, die durch einen Korrekturwinkel LW_{K} korrigiert werden soll, so berechnet der Lenkwinkelregler ein Korrekturmoment M_{K} um diesen Winkel einzustellen. Hält der Fahrer das Lenkrad "ideal" fest, muss er ein entsprechendes Gegenmoment aufbringen, welches das Korrekturmoment genau aufhebt. Mit diesem Gegenmoment ändert sich der gewünschte Lenkwinkel LW_{D} in der Richtung der äußeren Störung, so lange bis das Soll-Fahrverhalten dem Ist-Fahrverhalten angepasst und der Korrekturwinkel Null ist. Somit wird nicht der tatsächliche Lenkwinkel (Ist- Lenkwinkel) verändert, sondern der gewünschte Lenkwinkel und das Soll- Fahrverhalten.
Im Idealfall entspricht der Verlauf des aufzubringenden Gegenmoments genau dem negativen Moment, das der Fahrer aufbringen müsste, um den Korrekturwinkel einzustellen.

### Bezugszeichenliste

- 1: Hilfskraftlenkung
- 2: Lenkrad
- 3: Rad, gelenkt
- 4: Lenkwinkelsensor
- 5: Lenkmomentsensor
- 6: Elektromotor
- 7: Steuereinheit
- 8: Lenksäule
- 9: Lenkstrang
- 10: Lenkstrangmodell
- 11: Fahrdynamikrechner
- 12: Fahrzeugmodell
- 13: Lenkwinkelregler
- 14: Vorsteuerung
- 15: Kraftfahrzeug
- L_{R}: Radlenkwinkel
- Z_{E}: Störeinflüsse, extern
- Z_{I}: Störeinflüsse, intern
- M_{L}: Handlenkmoment
- M_{H}: Hilfslenkmoment
- M_{SERVO}: Servolenkmoment
- M_{K}: Korrekturlenkmoment
- xLW: Ist- Lenkwinkel
- wLW: Soll-Lenkwinkel
- eLW: Lenkwinkelabweichung
- wa_{y}, wdψ/dt: Soll- Fahrverhalten
- xay, xdψ/dt: Ist- Fahrverhalten
- LW_{K}: Korrektur-Lenkwinkel
- LW_{D}: Wunschlenkwinkel
- xFZG: Fahrzeugzustandsgrößen

## Patentansprüche

1. Verfahren für den Betrieb einer Hilfskraftlenkung für ein Kraftfahrzeug, bei dem ein Korrekturmoment (M_{K}) ermittelt wird, welches additiv einem Hilfsmoment (M_{H}) mittels eines Elektromotors (6) überlagert und in einen Lenkstrang (8) zur Beeinflussung eines Rad-Lenkwinkels (L_{R}) eingeleitet wird, wobei die Bestimmung des Korrekturlenkmoments (M_{K}) in Abhängigkeit eines Korrekturlenkwinkels (LW_{K}) erfolgt, wobei der Korrekturlenkwinkel (LW_{K}) in Abhängigkeit eines Ist- Fahrverhaltens (xa_{y}, xdψ/dt) und eines vorgebbaren Soll-Fahrverhaltens (wa_{y}, wdψ/dt) ermittelt wird, wobei die Vorgabe des Soll-Fahrverhaltens (wa_{y}, wdψ/dt) mittels eines Fahrzeugmodells (12) erfolgt, welches als Eingangsgröße einen vorgebbaren Wunschlenkwinkel (LW_{D}) erhält, **dadurch gekennzeichnet,**
**dass** der Wunschlenkwinkel (LW_{D}) mittels eines Lenkstrangmodells (10) in Abhängigkeit eines Handlenkmoments (M_{L}) ermittelt wird.

2. Verfahren für den Betrieb einer Hilfskraftlenkung nach Anspruch 1, **dadurch gekennzeichnet, dass** die Bestimmung eines Soll-Lenkwinkels (wLW) in Abhängigkeit des Korrekturlenkwinkels (LW_{K}) und des Wunschlenkwinkels (LW_{D}) erfolgt und im folgenden mit einem Ist-Lenkwinkel (xLW) zur Ermittlung einer Lenkwinkelabweichung (eLW) verglichen wird und einem Lenkwinkelregler (13) zugeführt wird, der im Folgenden eine Stellgröße für das dem Korrekturlenkwinkel (LW_{K}) entsprechenden Korrekturlenkmoment (M_{K}) für den Elektromotor (6) ermittelt.

## Claims

1. Method for operating a power steering system for a motor vehicle, in which method a correction moment (M_{K}) is determined which is superimposed additively on an auxiliary moment (M_{H}) by means of an electric motor (6) and is introduced into a steering line (8) for influencing a wheel steering angle (L_{R}), the correction steering moment (M_{K}) being determined as a function of a correction steering angle (LW_{K}), the correction steering angle (LW_{K}) being determined as a function of an actual driving behaviour (xay, xd_{Ψ}/dt) and a predefinable setpoint driving behaviour (way, wd_{Ψ}/dt), the setpoint driving behaviour (way, wd_{Ψ}dt) being predetermined by means of a vehicle model (12) which is given a predefinable desired steering angle (LW_{D}) as input variable, **characterized in that** the desired steering angle (LW_{D}) is determined by means of a steering-line model (10) as a function of a manual steering moment (M_{L}) .

2. Method for operating a power steering system according to Claim 1, **characterized in that** a setpoint steering angle (wLW) is determined as a function of the correction steering angle (LW_{K}) and the desired steering angle (LW_{D}) and is subsequently compared with an actual steering angle (xLW) to determine a steering-angle deviation (eLW) and is fed to a steering-angle regulator (13) which subsequently determines an actuating variable for the correction steering moment (M_{K}) for the electric motor (6), which correction steering moment (M_{K}) corresponds to the correction steering angle (LW_{K}).

## Revendications

1. Procédé de fonctionnement d'une direction assistée pour un véhicule automobile, dans lequel on détermine un couple de correction (M_{K}) qui est superposé par addition à un couple d'assistance (M_{H}) au moyen d'un moteur électrique (6) et qui est introduit dans une ligne de direction (8) pour influencer un angle de direction des roues (L_{R}), dans lequel on effectue la détermination du couple de direction de correction (M_{K}) en fonction d'un angle de direction de correction (LW_{K}), dans lequel on détermine l'angle de direction de correction (LW_{K}) en fonction d'un comportement de marche réel (xa_{y}, xd_{Ψ}dt) et d'un comportement de marche de consigne prédéterminable (wa_{y}, wd_{Ψ}/dt), dans lequel on effectue la prédétermination du comportement de marche de consigne (way, wd_{Ψ}/dt) au moyen d'un modèle de véhicule (12), qui reçoit comme grandeur d'entrée un angle de direction désiré prédéterminable (LW_{D}), **caractérisé en ce que** l'on détermine l'angle de direction désiré (LW_{D}) au moyen d'un modèle de ligne de direction (10) en fonction d'un couple de direction manuel (M_{L}) .

2. Procédé de fonctionnement d'une direction assistée selon la revendication 1, **caractérisé en ce que** l'on effectue la détermination d'un angle de direction de consigne (wLW) en fonction de l'angle de direction de correction (LW_{K}) et de l'angle de direction désiré (LW_{D}) et on le compare ensuite avec un angle de direction réel (xLW) pour la détermination d'un écart d'angle de direction (eLW) et on l'envoie à un régulateur d'angle de direction (13), qui détermine ensuite une grandeur de réglage pour le couple de direction de correction (M_{K}) correspondant à l'angle de direction de correction (LW_{K}) pour le moteur électrique (6).
